# EUROPÄISCHE PATENTSCHRIFT

(11) **EP 0 452 614 B1**
(45) Veröffentlichungstag und Bekanntmachung des Hinweises auf die Patenterteilung: **02.03.1994**
(21) Anmeldenummer: 91100666.6
(22) Anmeldetag: 21.01.1991
(51) Int. Cl.: E04C 2/08, E04C 2/34, B21D 39/03, F16B 5/00

(54) **Verbundelement**
A composite panel
Panneau composite

(30) Priorität: 14.04.1990 DE 4012206
(43) Veröffentlichungstag der Anmeldung: 23.10.1991
(73) Patentinhaber: Dr.Ing.h.c. F. Porsche Aktiengesellschaft, 70435 Stuttgart (DE)
(72) Erfinder: Wurl, Willi, W-7532 Niefern-Öschelbronn 1 (DE)

(56) Entgegenhaltungen:
- EP-A- 0 099 240
- FR-A- 764 771
- GB-A- 740 953
- US-A- 2 205 725
- US-A- 2 313 228

## Beschreibung

Die Erfindung bezieht sich auf ein Verbundelement, das aus Leichtmetall gefertigt ist und sich aus wenigstens einem plattenförmigen Element und einem durch ein Strangpreßprofil gebildeten länglichen Profilteil zusammensetzt, wobei am plattenförmigen Element ein profilierter verformbarer Haltesteg ausgebildet ist, der mit einer korrespondierenden Aufnahme des Profilteils zusammenwirkt, dergestalt, daß durch Umformen des Haltesteges eine formschlüssige Fügeverbindung des Verbundelementes gebildet wird, bei der Randabschnitte des Haltesteges seitlich Hinterschneidungen der Aufnahme hintergreifen.

Ein Verbundelement der eingangs genannten Gattung geht aus der US-A-3 290 077 hervor. Als Profilteil wird bei diesem Verbundelement ein Strangpreßprofil aus Leichtmetall verwendet, wogegen das plattenförmige Element durch ein Blechteil aus Leichtmetall gebildet wird.

Nachteilig an dieser Anordnung ist, daß am plattenförmigen Element an den Randbereichen mehrere aufwendige Biege- bzw. Abkantvorgänge durchgeführt werden müssen, die zeit- und kostenintensiv sind. Ferner müssen die endseitigen Haltestege des plattenförmigen Elementes relativ toleranzgenau hergestellt werden, um eine funktionsgerechte, klapperfreie Verbindung zu gewährleisten. Da das Umformen des Haltesteges mittels eines zangenförmigen Werkzeuges erfolgt, ist zum Einführen dieses Werkzeuges relativ viel Platz in Höhenrichtung erforderlich, was eine große Bauhöhe im Verbindungsbereich bedingt.

Die GB-A-740 953 offenbart ein Verbundelement, das sich aus einem plattenförmigen Element und einem länglichen Profilteil zusammensetzt, wobei am plattenförmigen Element ein profilierter verformbarer Haltesteg ausgebildet ist, der mit einer korrespondierenden Aufnahme des Profilteils zusammenwirkt, dergestalt, daß durch Umformen des Haltesteges eine formschlüssige Fügeverbindung des Verbundelementes gebildet wird, bei der Randabschnitte des Haltesteges seitliche Hinterschneidungen der Aufnahme hintergreifen, wobei das plattenförmige Element aus Metall gebildet wird und die Haltestege frei zugänglich benachbart von ebenen, außenliegenden Wandabschnitten des plattenförmigen Elementes angeordnet sind.

Bei dieser Anordnung liegen Randabschnitte des Haltesteges lediglich an den Innenseiten der korrespondierenden Aufnahme an. Ferner federn die schräggerichteten Wandabschnitte des dach- oder V-förmigen Haltesteges aufgrund des ebenen Bodenabschnitts der Aufnahme nach dem Niederdrücken wieder etwas zurück, so daß bei einem derartigen Verbundelement Klappergeräusche auftreten können.

Aufgabe der Erfindung ist es, ein Verbundelement der eingangs genannten Gattung so weiterzubilden, daß bei geringer Bauhöhe des Verbindungsbereiches ein einfach herstellbares kostengünstiges Verbundelement geschaffen wird, wobei die Festigkeit der Verbindung etwa so hoch wie bei einer Punktschweißverbindung sein sollte.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung des plattenförmigen Elementes und des länglichen Profilteiles als Strangpreßprofil aus Leichtmetall ein kostengünstiges leichtgewichtiges Verbundelement geschaffen wird. Die am plattenförmigen Element benachbart der ebenen Außenseite angeordneten etwa V-förmigen Haltestege lassen sich mittels eines Druckstempels eines Preßwerkzeuges einfach umformen. Der Verbindungsbereich benötigt nur eine relativ geringe Bauhöhe. Durch die angeformten Stützarme am plattenförmigen Element wird die S-förmige Anformung der Aufnahme beidseitig formschlüssig umschlossen, so daß eine sichere Verkrallung zwischen den Bauteilen des Verbundelementes stattfindet. Die Verkrallung hat eine ähnliche Festigkeit wie eine Punktschweißverbindung. Durch die konkave Ausbildung des Bodenabschnittes der Aufnahme wird der Haltesteg über den Totpunkt nach unten gedrückt und federt danach wieder etwas zurück. Durch die Stützarme am plattenförmigen Element wird ein seitliches Wegbiegen der S-förmigen Anformung verhindert. Zugleich erfolgt durch die Stützarme eine Vorfixierung zwischen den Profilteilen und den plattenförmigen Elementen des Verbundelementes.

Ein Ausführungsbeispiel der Erfindung ist in der Zeichnung dargestellt und wird im folgenden näher beschrieben.

Es zeigt:
- Fig. 1: einen Schnitt quer zur Fahrzeuglängsrichtung durch ein Verbundelement einer Fahrzeug-Aufbaustruktur,
- Fig. 2: eine Einzelheit X der Fig. 1 in größerem Maßstab in Montagestellung,
- Fig. 3: eine Ansicht entsprechend Fig. 2 in zusammengefügter Stellung des Verbundelementes,
- Fig. 4: eine Einzelheit Y der Fig. 1 in größerem Maßstab,
- Fig. 5: eine Ansicht entsprechend Fig. 4 in zusammengefügtem Zustand des Verbundelementes,
- Fig. 6: einen Querschnitt durch das Profilteil mit der Aufnahme in größerem Maßstab,
- Fig. 7: einen Querschnitt durch den Haltesteg und die Stützarme des plattenförmigen Elementes in größerem Maßstab.

Ein vorzugsweise aus Leichtmetall (Aluminium, Aluminiumlegierung, Magnesium oder dgl.) gefertigtes Verbundelement 1 setzt sich aus wenigstens einem plattenförmigen Element 2 und einem länglichen Profilteil 3 zusammen, die an gemeinsamen Verbindungsbereichen 4 durch Umformen formschlüssig miteinander verbunden sind.

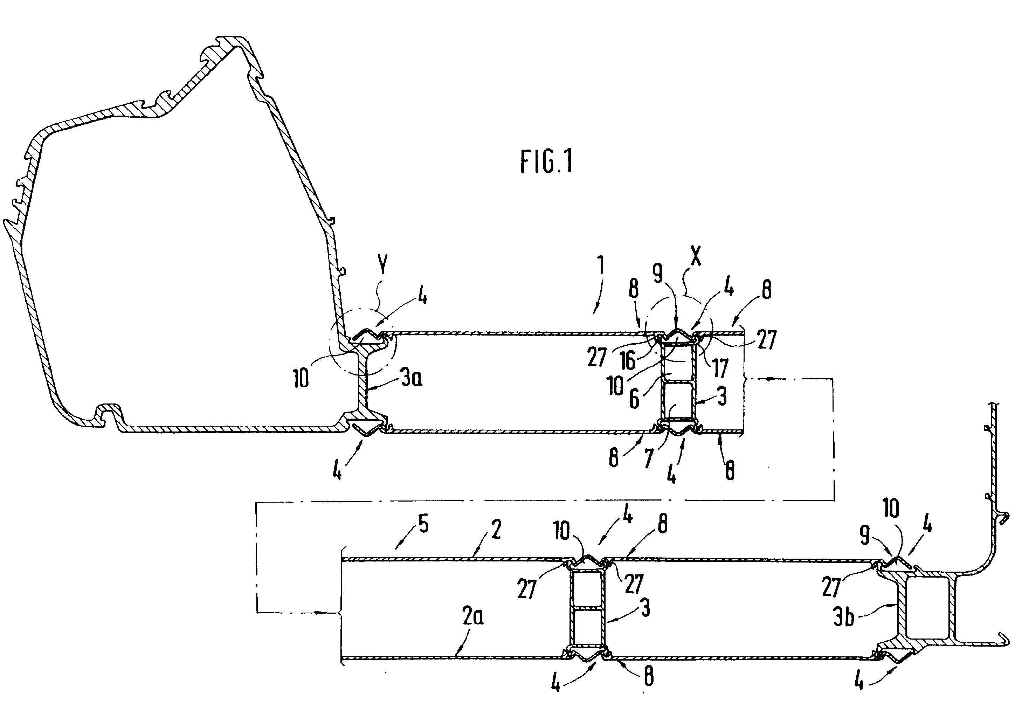

Das plattenförmige Element 2 und das längliche Profilteil 3 werden durch Strangpreßprofile gebildet, die einfach und kostengünstig herstellbar sind. Gemäß Fig. 1 wird das Verbundelement 1 durch eine doppelwandige Bodenanlage 5 einer Fahrzeug-Aufbaustruktur gebildet. Die Bodenanlage 5 umfaßt ein oberes plattenförmiges Element 2, ein unteres plattenförmiges Element 2a und örtlich angeordnete längsgerichtete Profilteile 3, 3a, 3b, wobei die seitlich außenliegenden Profilteile 3a und 3b durch einen Fahrzeuglängsträger (Schweller) und einen Mitteltunnel gebildet werden.

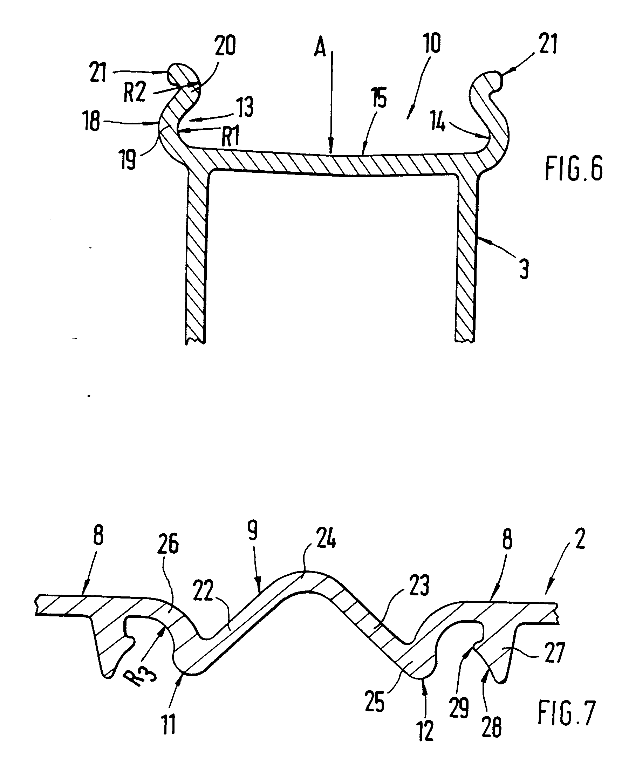

Die Profilteile 3 sind als geschossene Hohlprofile ausgebildet, die zwei übereinanderliegende Kammern 6, 7 aufweisen. Zur Verbindung des plattenförmigen Elementes 2, 2a mit dem Profilteil 3, 3a, 3b sind am plattenförmiges Element 2, 2a benachbart von ebenen außenliegenden horizontalverlaufenden Wandabschnitten 8 örtlich verformbare, profilierte Haltestege 9 ausgebildet, die mit korrespondierenden Aufnahmen 10 des Profilteiles 3, 3a, 3b zusammenwirken, dergestalt, daß durch Umformen des Haltesteges 9 eine formschlüssige Fügeverbindung des Verbundelementes 1 erreicht wird, bei der Randabschnitte 11, 12 des Haltesteges 9 seitliche Hinterschneidungen 13, 14 der Aufnahme 10 hintergreifen (Fig. 6 und 7).

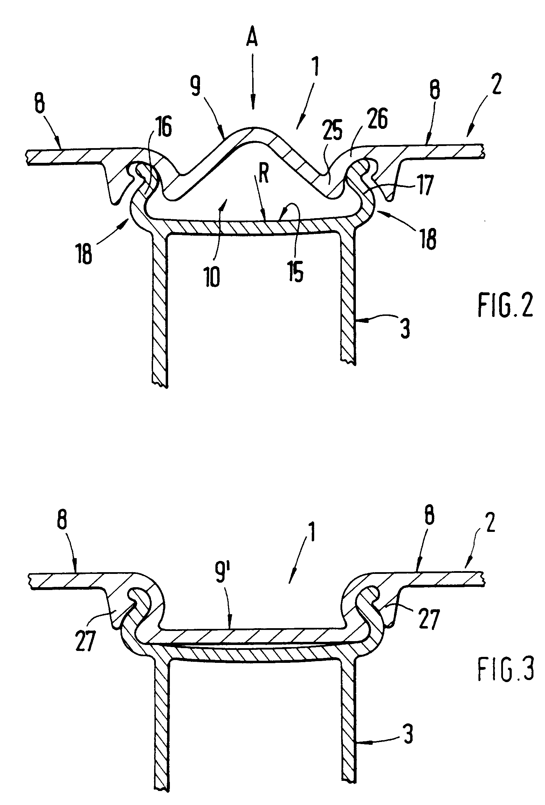

Gemäß Fig. 1 sind sowohl an der Oberseite als auch an der Unterseite des Profilteiles 3, 3a, 3b rinnenförmige Aufnahmen 10 vorgesehen. Jede Aufnahme 10 setzt sich aus einem Bodenabschnitt 15 und seitlichen Begrenzungen 16, 17 zusammen, wobei im Bereich der seitlichen Begrenzungen 16, 17 die Hinterschneidungen 13, 14 ausgebildet sind (Fig. 2 und 6). Zumindest eine seitliche Begrenzung (z.B. 16) der Aufnahme 10 wird durch eine dünnwandige, etwa S-förmige Anformung 18 des Profilteils 3, 3a, 3b gebildet. Die Anformung 18 setzt sich aus zwei kreisbogenförmigen Abschnitten 19, 20 zusammen, wobei die Radieneinsatzpunkte R1, R2 der beiden Abschnitte 19, 20 auf gegenüberliegenden Seiten der Anformung 18 liegen (Fig. 6).

Ein erster Abschnitt 19 ist tangential an den Bodenabschnitt 15 der Aufnahme 10 angeschlossen, wobei sich der Radieneinsatzpunkt R1 innerhalb der Aufnahme 10 erstreckt. Der Radieneinsatzpunkt R2 des anschließenden zweiten Abschnitts 20 befindet sich außerhalb der Aufnahme 10. Das freie Ende 21 des zweiten Abschnittes 20 ist jeweils nach außen hin gerichtet. Der an den Bodenabschnitt 15 angeschlossene erste Abschnitt 19 weist einen geringfügig kleineren Radius auf als der anschließende zweite Abschnitt 20.

Bei den Profilteilen 3 sind jeweils beide seitlichen Begrenzungen 16, 17 als S-förmige Anformungen 18 ausgebildet, wobei die beiden Anformungen 18 spiegelbildlich zueinander ausgebildet sind. Bei den außenliegenden Profilteilen 3a, 3b hingegen ist jeweils nur eine seitliche Begrenzung z.B. 16 als S-förmige Anformung 18 ausgebildet.

Der Bodenabschnitt 15 der Aufnahme 10 weist in Arbeitsrichtung A eines Druckstempels eines Preßwerkzeuges gesehen eine nach innen hin gewölbte, konkave Form auf, die radienförmig ausgebildet ist. Beim Umformen des Haltesteges 9 wird dieser so lange nach unten gedrückt, bis er auf dem Bodenabschnitt 15 aufliegt. Anschließend federt der Haltesteg 9 wieder um einen geringen Betrag zurück und nimmt dann eine etwa gerade, gestreckte horizontale Lage ein.

Der deformierbare Haltesteg 9 ist im Anlieferungszustand des plattenförmigen Elementes 2, 2a etwa dachförmig oder V-förmig ausgebildet, wobei die beiden schräggerichteten Wandabschnitte 22, 23 über einen radienförmigen Übergangsbereich 24 miteinander verbunden sind.

Die beiden Wandabschnitte 22, 23 des Haltesteges 9 sind annähernd rechtwinkelig zueinander ausgerichtet. Der radienförmige Übergangsbereich 24 überragt im Anlieferungszustand - in Höhenrichtung gesehen - die ebenen Wandabschnitte 8 geringfügig, wogegen die Randabschnitte 11, 12 versenkt zur Ebene der Wandabschnitte 8 verlaufen.

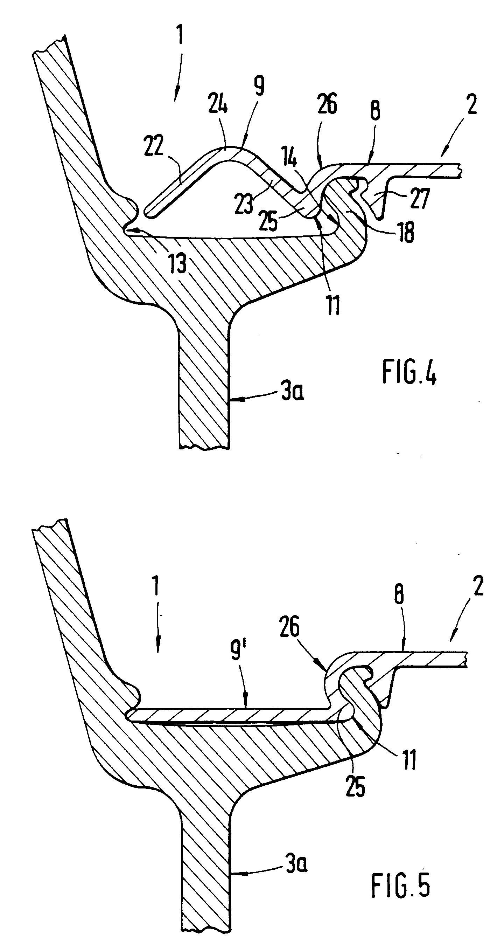

Im umgeformten Zustand nimmt der Haltesteg 9 gemäß den Fig. 3 und 5 eine gestreckte gerade Form ein (Stellung 9') und hintergreift mit Randabschnitten 11, 12 die seitlichen Hinterschneidungen 13, 14 der Aufnahme 10. Zumindest an einem Randabschnitt z.B. 11 des Haltesteges 9 ist eine Querschnittserweiterung 25 vorgesehen, wobei die Querschnittserweiterung 25 der Form der Hinterschneidung 13, 14 angepaßt ist. Bei zusammengefügtem Verbundelement 1 füllt die Querschnittserweiterung 25 den Raum der Hinterschneidung 13, 14 vollständig aus.

Zwischen dem Randabschnitt 11, 12 des Haltesteges 9 und dem außenliegenden ebenen Wandabschnitt 8 des plattenförmigen Elementes 2, 2a ist ein gebogener Übergangsbereich 26 vorgesehen, der radienförmig ausgebildet ist. Der Radieneinsatzpunkt R3 des Übergangsbereiches 26 liegt auf der dem Haltesteg 9 abgekehrten Seite und zwar unterhalb des oberen Wandabschnittes 8.

Der etwa viertelkreisförmige Übergangsbereich 26 verbindet die innenliegende Querschnittserweiterung 25 des Haltesteges 9 mit dem ebenen außenliegenden Wandabschnitt 8 des plattenförmigen Elementes 2, 2a. Der gebogene Übergangsbereich 26 liegt bei zusammengefügtem Verbundelement 1 an der Innenseite der S-förmigen Anformung 18 formschlüssig an (Fig. 3 und 5).

Ferner ist zumindest auf einer Seite eines Randabschnittes 11, 12 des Haltesteges 9 am plattenförmigen Element 2, 2a ein angeformter nach unten ragender Stützarm 27 vorgesehen, wobei bei zusammengefügtem Verbundelement 1 eine seitliche Begrenzung 16, 17 der Aufnahme 10 (S-förmige Anformung 18) zwischen dem Stützarm 27 und dem umgeformten Haltesteg 9 eingeklemmt ist.

Vorzugsweise sind benachbart von beiden Randabschnitten 11, 12 des Haltesteges 9 Stützarme 27 am plattenförmigen Element 2, 2a vorgesehen. Jeder Stützarm 27 verläuft mit geringem Abstand zum angrenzenden bogenförmigen Übergangsbereich 26 bzw. zum Randabschnitt 11, 12 des Haltesteges 9 und weist auf der der Anformung 18 des Profilteiles 3, 3a, 3b zugekehrten Seite eine Stützschulter 28 und eine Nase 29 auf, wobei die Stützschulter 28 und die Nase 29 den Formverlauf der Anformung 18 angepaßt sind und bei zusammengefügtem Verbundelement 1 an der Außenseite der Anformung 18 formschlüssig anliegen.

Durch die Stützschulter 28 wird ein seitliches Wegbiegen der Anformung 18 beim Umformen des Haltesteges 9 verhindert. Ein unteres Ende des Stützarmes 27 verläuft im Anlieferungszustand des plattenförmigen Elementes 2, 2a etwa auf gleicher Höhe wie die Randabschnitte 11, 12 des Haltesteges 9.

Die Verbindung zwischen plattenförmigem Element 2, 2a und Profilteil 3, 3a, 3b erfolgt in der Weise, daß das oder die plattenförmigen Elemente 2, 2a auf die vorpositionierten Profilteile 3, 3a, 3b lose aufgesetzt werden. Dabei greift jeder Haltesteg 9 abschnittsweise in die korrespondierende Aufnahme 10 des Profilteiles 3, 3a, 3b ein, wogegen die seitlichen Stützarme 27 des plattenförmigen Elementes 2, 2a mit seitlichem Abstand zu den S-förmigen Anformungen 18 des Profilteiles 3, 3a, 3b verlaufen. Anschließend wird jeder Haltesteg 9 mittels eines nicht gezeigten Druckstempels nach unten gedrückt, bis der Haltesteg 9 eine gestreckte gerade Form einnimmt und die Randabschnitte 11, 12 die Hinterschneidungen 13, 14 der Aufnahme 10 hintergreifen. Dadurch werden die seitlichen S-förmigen Anformungen 18 der Profilteile 3, 3a, 3b in Richtung Stützarme 27 bewegt und kommen formschlüssig zur Anlage.

## Patentansprüche

1. Verbundelement, das aus Leichtmetall gefertigt ist und sich aus wenigstens einem plattenförmigen Element (2; 2 a) und wenigstens einem durch ein Strangpreßprofil gebildeten länglichen Profilteil (3; 3 a; 3 b) zusammensetzt, wobei an jedem plattenförmigen Element (2; 2 a) zumindest ein profilierter verformbarer Haltesteg (9) ausgebildet ist, der jeweils mit einer mit dem Haltesteg (9) korrespondierenden, rinnenförmigen Aufnahme (16) des Profilteils (3; 3 a; 3 b) zusammenwirkt, dergestalt, daß durch Umformen des im Anlieferungszustand dachförmig oder V-förmig profilierten und im umgeformten Zustand eine gestreckte, gerade Form einnehmenden Haltesteges (9) eine formschlüssige Fügeverbindung zwischen dem plattenförmigen Element (2; 2 a) und dem Profilteil (3; 3 a; 3 b) gebildet wird, bei der Randabschnitte (11, 12) des Haltesteges (9) seitliche Hinterschneidungen (13, 14) der Aufnahme (10) hintergreifen, dadurch gekennzeichnet, daß das plattenförmige Element (2; 2 a) durch ein Strangpreßprofil gebildet ist, daß sich die Aufnahme (10) des Profilteils (3; 3 a; 3 b), im Querschnitt gesehen, aus einem Bodenabschnitt (15) und zwei seitlichen Begrenzungen (16, 17) zusammensetzt, wobei zumindest eine der seitlichen Begrenzungen (16, 17) der Aufnahme (10) durch eine dünnwandige, etwa S-förmige Anformung (18) am Profilteil (3; 3 a; 3 b) gebildet ist und daß bei zusammengefügtem Verbundelement (1) die durch die S-förmige Anformung (18) gebildete seitliche Begrenzung (16, 17) der Aufnahme (10) zwischen einem am plattenförmigen Element (2; 2 a) angeordneten, nach unten ragenden Stützarm (27) und dem umgeformten Haltesteg (9) eingeklemmt ist, wobei eine Querschnittserweiterung (25) des Randabschnittes (11, 12) des Haltesteges (9) den Raum der Hinterschneidung (13; 14) vollständig ausfüllt, ein gebogener Übergangsbereich (26) des Haltesteges (9) an der Innenseite der S-förmigen Anformung (18) formschlüssig anliegt und eine Stützschulter (28) und eine Nase (29) des Stützarmes (27) an der Außenseite der S-förmigen Anformung (18) anliegen.

2. Verbundelement nach Anspruch 1, **dadurch** **gekennzeichnet,** daß vorzugsweise benachbart von beiden Randabschnitten (11, 12) des Haltesteges (9) angeformte Stützarme (27) am plattenförmigen Element (2, 2 a) vorgesehen sind.

3. Verbundelement nach den Ansprüchen 1 und 2, **dadurch gekennzeichnet**, daß sich die Anformung (18) aus zwei kreisbogenförmigen aneinander gesetzten Abschnitten (19, 20) zusammensetzt, wobei die Radieneinsatzpunkte (R1, R2) der beiden Abschnitte (19, 20) auf gegenüberliegenden Seiten der Anformung (18) liegen.

4. Verbundelement nach Anspruch 3, **dadurch gekennzeichnet**, daß der Radieneinsatzpunkt (R1) des an den Bodenabschnitt (15) der Aufnahme (10) anschließenden Abschnittes (19) innerhalb der Aufnahme (10) liegt, wogegen sich der andere Radieneinsatzpunkt (R2) außerhalb der Aufnahme (10) befindet.

5. Verbundelement nach Anspruch 3, **dadurch gekennzeichnet**, daß der an den Bodenabschnitt (15) anschließende Abschnitt (19) einen kleineren Radius aufweist als der nach außen gerichtete zweite Abschnitt (20).

6. Verbundelement nach den Ansprüchen 4 und 5, **dadurch gekennzeichnet**, daß der Bodenabschnitt (15) der Aufnahme (10) bei konkaver Form leicht nach innen hin gewölbt ist.

7. Verbundelement nach Anspruch 1, **dadurch gekennzeichnet**, daß zwischen dem Randabschnitt (11, 12) des Haltesteges (9) und dem ebenen außenliegenden Wandabschnitten (8) des plattenförmigen Elementes (2, 2 a) der gebogene Übergangsbereich (26) vorgesehen ist, wobei ein Radieneinsatzpunkt (R3) des Übergangsbereiches (26) zwischen der Querschnittserweiterung (25) und dem außenliegenden Stützarm (27) liegt und zwar unterhalb des ebenen Wandabschnittes (8).

## Claims

1. A composite part, produced from light metal and comprising at least one plate-shaped member (2; 2a) and at least one elongate shaped part (3; 3a; 3b) formed by an extruded section, wherein at least one shaped deformable retaining web (9) is formed on each plate-shaped member (2; 2a) and cooperates respectively with a channel-shaped receiving means (16) [*sic*] in the shaped part (3; 3a; 3b) corresponding to the retaining web (9), in such a way that by re-shaping the retaining web (9) - sectioned in a roof-shape or a V-shape in the delivered state and having an extended straight shape in the re-shaped state - a joint with positive locking is formed between the plate-shaped member (2; 2a) and the shaped part (3; 3a; 3b), wherein edge portions (11, 12) of the retaining web (9) engage behind lateral undercuttings (13, 14) in the receiving means (10), **characterized in that** the plate-shaped member (2; 2a) is formed by an extruded section, the receiving means (10) of the shaped part (3; 3a; 3b) comprises - as viewed in cross-section - a base portion (15) and two lateral boundaries (16, 17), wherein at least one of the lateral boundaries (16, 17) of the receiving means (10) is formed by a thin-walled, substantially S-shaped attachment (18) integrally formed on the shaped part (3; 3a; 3b), and when the composite part (1) is put together the lateral boundary (16, 17) formed by the S-shaped integrally formed attachment (18) on the receiving means (10) is clamped between the re-shaped retaining web (9) and a support arm (27) projecting downwards and arranged on the plate-shaped member (2; 2a), wherein a cross-sectional enlargement (25) of the edge portion (11, 12) of the retaining web (9) completely fills the space of the undercutting (13; 14), a curved transition area (26) of the retaining web (9) rests against the inside of the S-shaped integrally formed attachment (18) with positive locking, and a support shoulder (28) and a lip (29) on the support arm (27) rest against the outside of the S-shaped integrally formed attachment (18).

2. A composite part according to Claim 1, **characterized in that** integrally formed support arms (27) are provided, preferably adjacent to the two edge portions (11, 12) of the retaining web (9), on the plate-shaped member (2; 2a).

3. A composite part according to Claims 1 and 2, **characterized in that** the integrally formed attachment (18) comprises two adjoining curved portions (19, 20), the centres (R1, R2) of the radii of the two portions (19, 20) being situated on opposite sides of the integrally formed attachment (18).

4. A composite part according to Claim 3, **characterized in** **that** the centre (R1) of the radius of the portion (19) attached to the base portion (15) of the receiving means (10) is situated inside the receiving means (10), whereas the other radius centre (R2) is situated outside the receiving means (10).

5. A composite part according to Claim 3, **characterized in** **that** the portion (19) attached to the base portion (15) has a smaller radius than the second, outwardly orientated portion (20).

6. A composite part according to Claims 4 and 5, **characterized in** **that** the base portion (15) of the receiving means (10) is curved slightly inwards in a concave shape.

7. A composite part according to Claim 1, **characterized in** **that** the curved transition area (26) is provided between the edge portion (11, 12) of the holding web (9) and the flat wall portions (8) of the plate-shaped member (2; 2a) which are situated on the outside, wherein a radius centre (R3) of the transition area (26) is situated between the cross-sectional enlargement (25) and the support arm (27) lying on the outside, namely below the flat wall portion (8).

## Revendications

1. Elément composite qui est réalisé en métal léger et qui se compose d'au moins un élément (2 ; 2a) en forme de plaque et d'au moins un élément profilé (3 ; 3a ; 3b) allongé, formé par un profilé extrudé, sur chaque élément (2 ; 2a) en forme de plaque étant formée au moins une nervure de maintien (9) déformable, profilée, qui coopère avec un logement (16) de l'élément profilé (3 ; 3a ; 3b), en forme de rigole, correspondant à la nervure de maintien (9), de telle sorte que par déformation de la nervure de maintien (9) profilée en forme de toit ou en forme de V à l'état de livraison et prenant une forme rectiligne allongée à l'état déformé, il est formé un assemblage bout à bout par concordance de forme entre l'élément (2 ; 2a) en forme de plaque et l'élément profilé (3 ; 3a ; 3b), dans lequel des parties de bordure (11, 12) de la nervure de maintien (9) passent derrière des détalonnages (13, 14) du logement (10), caractérisé en ce que l'élément (2 ; 2a) en forme de plaque est formé par un profilé extrudé, en ce que le logement (10) de l'élément profilé (3 ; 3a ; 3b), vu en coupe transversale, se compose d'une partie de fond (15) et de deux délimitations latérales (16, 17), l'une des délimitations latérales (16, 17) au moins du logement (10) étant formée par une partie d'un seul tenant en S (18) à paroi mince, sur l'élément profilé (3 ; 3a ; 3b) et en ce que lorsque l'élément composite (1) est assemblé, la délimitation latérale (16, 17) du logement (10), formée par la partie en S (18), est serrée entre un bras d'appui (27) placé sur l'élément (2 ; 2a) en forme de plaque, dépassant vers le bas, et la nervure de maintien (9) déformée, un élargissement de la section transversale (25) de la partie de bordure (11, 12) de la nervure de maintien (9), remplissant totalement le volume du détalonnage (13 ; 14), une zone de transition (16) courbée de la nervure de maintien (9) s'appliquant par concordance de forme contre le côté intérieur de la partie en S (18) et un épaulement de soutien (28) ainsi qu'un ergot (29) du bras d'appui (27) s'appliquant contre le côté extérieur de la partie en S (18).

2. Elément composite selon la revendication 1, caractérisé en ce que de préférence au voisinage des deux parties de bordure (11, 12) de la nervure de maintien (9), il est prévu des bras d'appui (27) formés d'un seul tenant sur l'élément (2 ; 2a) en forme de plaque.

3. Elément composite selon les revendications 1 et 2, caractérisé en ce que la partie formée d'un seul tenant (18) se compose de deux sections (19, 20) en arc de cercle juxtaposées, les points d'application des rayons (R1, R2) des deux sections (19, 20) se trouvant sur des côtés opposés de la partie formée d'un seul tenant (18).

4. Elément composite selon la revendication 3, caractérisé en ce que le point d'application du rayon (R1) de la section (19) se raccordant à la partie de fond (15) du logement (10), se situe à l'intérieur du logement (10), tandis que l'autre point d'application du rayon (R2) se trouve à l'extérieur du logement (10).

5. Elément composite selon la revendication 3, caractérisé en ce que la section (19) se raccordant à la partie de fond (15) présente un rayon plus petit que la seconde section (20) dirigée vers l'extérieur.

6. Elément composite selon les revendications 4 et 5, caractérisé en ce que la partie de fond (15) du logement (10) de forme concave est légèrement cintrée vers l'intérieur.

7. Elément composite selon la revendication 1, caractérisé en ce qu'entre la partie de bordure (11, 12) de la nervurc de maintien (9) et les parties de paroi (8) planes, situées à l'extérieur, de l'élément (2, 2a) en forme de plaque, il est prévu la zone de transition (26) courbée, un point d'application du rayon (R3) de la zone de transition (26) se situant entre l'élargissement de la section transversale (25) et le bras d'appui (27) extérieur et ce au-dessous de la partie de paroi (8) plane.
